# EUROPEAN PATENT APPLICATION

(11) **EP 4 614 026 A1**
(43) Date of publication of application: **10.09.2025**
(21) Application number: 23894428.4
(22) Date of filing: 09.11.2023
(51) Int. Cl.: F16G 13/06, F16B 39/30

(54) **CONNECTING LINK AND CHAIN**

(30) Priority: 21.11.2022 JP 2022185928
(71) Applicant: Tsubakimoto Chain Co., Osaka-shi, Osaka 530-0005 (JP)
(72) Inventor: ABE Yuji, Osaka-shi, Osaka 530-0005 (JP)
(74) Representative: Neumann, Ditmar
(86) International application number: PCT/JP2023/040315
(87) International publication number: WO 2024/111418

(57) **Abstract**

A joint link (14) includes joint pins (33), a first link plate (31), and a second link plate (32). The joint pins (33) each have a first male threaded portion (36) at the base end. The joint pins (33) also each have, on the distal side of the first male threaded portion (36), a first frustum-shaped portion (38), the cross-sectional area of which gradually increases toward the base-end side. The first link plate (31) has holes at both longitudinal ends through which the joint pins can be inserted. At least one of the holes at both ends constitutes a first pin hole (44) having a female threaded portion into which a first male threaded portion can be screwed, and an inner surface (44a) with a concave conical surface shape corresponding to the outer surface (38a) of the first frustum-shaped portion. The second link plate (32) has holes at both longitudinal ends through which the joint pins can be inserted. At least one of the holes at both ends constitutes a second pin hole (48) into which the tip end of a joint pin can fit.

## Description

### TECHNICAL FIELD

The present disclosure relates to a connecting link used to break and connect a chain and to a chain that can be broken and connected with the connecting link.

### BACKGROUND ART

Patent Literature 1 describes an example of a chain including inner link plates and outer link plates located alternately in the longitudinal direction of the chain. The inner link plates and the outer link plates are arranged in series so that their ends overlap each other in the widthwise direction of the chain. A coupling pin pivotally couples the ends of the inner link plate and the outer link plate that are adjacent to each other in the longitudinal direction of the chain. In this case, the coupling pin has an end that is press-fitted into a pin hole of the outer link plate. That is, the coupling pin is in an interference fitting state in which it is fitted into the pin hole of the outer link plate in a manner that it cannot be rotated.

### CITATION LIST

### Patent Literature

Patent Literature 1: Japanese Laid-Open Patent Publication No. 2011-94660.

### SUMMARY OF INVENTION

### Technical Problem

A user of a chain may break and connect the chain to a predetermined length on-site. In this case, if the coupling pin is in a clearance fitting state in which it is fitted into the pin hole of the outer link plate in a manner that it can be rotated, the user can readily remove the end of the coupling pin from the pin hole or readily fit the end of the coupling pin into the pin hole. In such a clearance fitting state, however, the outer surface of the connecting pin will slide along the wall surface of the pin hole. Thus, friction resulting from aging may enlarge the diameter of the pin hole. This will result in undesirable stretching of the chain subsequent to chain breaking and connecting.

If the coupling pin is in an interference fitting state in which it is fitted into the pin hole of the outer link plate in a manner that it cannot be rotated, the outer surface of the connecting pin will not slide along the wall surface of the pin hole. This will avoid undesirable stretching of the broken and connected chain. However, when setting the end of coupling pin in an interference fitting state in the pin hole of the outer link plate, the connecting pin will have to be press-fitted into the connecting pin with hydraulic equipment or the like or be driven into the pin hole with a large hammer. In this manner, although interference fitting will limit undesirable stretching of the broken and connected chain, the fitting and removal of the connecting pin when breaking and connecting the chain will be burdensome.

### Solution to Problem

A connecting link in accordance with a first aspect of the present disclosure is used to break and connect a chain that includes links arranged in series in a longitudinal direction of the chain, in which adjacent ones of the links in the longitudinal direction are coupled together in a rotatable manner by a coupling pin. The connecting link includes a connecting pin including a male threaded portion at a basal end and a truncated conical portion that is located toward a distal end from the male threaded portion and has a cross-sectional area that is gradually increased toward the basal end, a first link plate including a hole in each of one end and another end in a longitudinal direction to allow insertion of the connecting pin, where at least one of the hole in the one end and the hole in the other end defines a first pin hole including a female threaded portion allowing for fastening of the male threaded portion and a wall surface shaped as a truncated cone in correspondence with an outer surface of the truncated conical portion, and a second link plate including a hole in each of one end and another end in a longitudinal direction to allow insertion of the connecting pin. At least one of the hole in the one end and the hole in the other end defines a second pin hole allowing for fitting of the distal end of the connecting pin.

A connecting link in accordance with a second aspect of the present disclosure is used to break and connect a chain that includes links arranged in series in a longitudinal direction of the chain, in which adjacent ones of the links in the longitudinal direction are coupled together in a rotatable manner by a coupling pin. The connecting link includes a connecting pin including a first male threaded portion at a basal end, a second male threaded portion at a distal end, and a first truncated conical portion that is located toward the distal end from the first male threaded portion and has a cross-sectional area that is gradually increased toward the basal end, and a first link plate including a hole in each of one end and another end in a longitudinal direction to allow insertion of the connecting pin. At least one of the hole in the one end and the hole in the other end defines a first pin hole including a female threaded portion allowing for fastening of the first male threaded portion and a wall surface shaped as a truncated cone in correspondence with an outer surface of the first truncated conical portion. The connecting link further includes a second link plate including a hole in each of one end and another end in a longitudinal direction to allow insertion of the connecting pin. At least one of the hole in the one end and the hole in the other end defines a second pin hole allowing for passage of the second male threaded portion. The connecting link also includes a nut member allowing for fastening of the second male threaded portion of the connecting pin.

A chain in accordance with one aspect of the present disclosure includes links arranged in series in a longitudinal direction of the chain, a coupling pin pivotally coupling adjacent ones of the links in the longitudinal direction, and the connecting link. The connecting link is located at an intermediate part in the longitudinal direction of the chain, and the connecting link couples one of the links that is adjacent to the connecting link at one side in the longitudinal direction and one of the links that is adjacent to the connecting link at another side in the longitudinal direction.

### BRIEF DESCRIPTION OF DRAWINGS

Fig. 1 is an exploded perspective view showing part of a chain in accordance with one embodiment.
Fig. 2 is a plan view showing a part where the chain is broken and connected by a connecting link in a partially cut away state.
Fig. 3 is a perspective view illustrating an aligning step when breaking and connecting the chain.
Fig. 4 is a plan view illustrating a pin insertion step when breaking and connecting the chain in a partially cut away state.
Fig. 5 is a plan view showing part of a connecting link in accordance with a modified example in a partially cut away state.
Fig. 6 is a plan view showing part of a connecting link in accordance with another modified example in a partially cut away state.

### DESCRIPTION OF EMBODIMENTS

Embodiments of a connecting link and a chain will now be described with reference to the drawings.

### Overall Structure

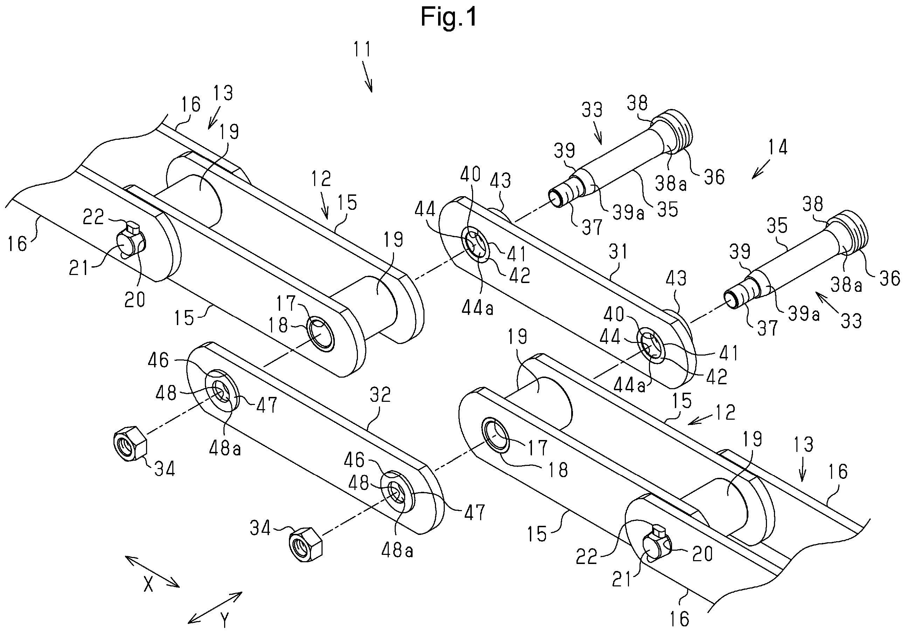

As shown in Fig. 1, a chain 11 in accordance with the present embodiment includes inner links 12 and outer links 13 arranged in series and located alternately in a longitudinal direction X of the chain 11. Further, the chain 11 includes a connecting link 14 located at an intermediate part in the longitudinal direction X. An inner link 12, which is an example of a further link adjacent to the connecting link 14, is located at each of one side and the other side of the connecting link 14 in the longitudinal direction X of the chain 11. The single connecting link 14 couples the inner link 12 adjacent to one side of the connecting link 14 in the longitudinal direction X of the chain 11 to the inner link 12 adjacent to the other side. Accordingly, the chain 11 allows, for example, a user or the like of the chain 11 to break and connect the chain 11 on-site at the connecting link 14 so that the chain 11 will have a certain length.

Each inner link 12 includes two inner link plates 15 spaced apart from each other in a widthwise direction Y that is orthogonal to the longitudinal direction X of the chain 11. Each outer link 13 includes two outer link plates 16 sandwiching the two inner link plates 15 of the inner link 12 adjacent in the longitudinal direction X of the chain 11 from the outer side in the widthwise direction Y. The inner link plates 15 and the outer link plates 16 are, for example, forged or stamped from a sheet of steel or the like. Each of the inner link plates 15 and the outer link plates 16 has the form of a substantially rectangular plate extending in the longitudinal direction X of the chain 11.

A circular bushing hole 17 extends through each of one longitudinal end and another longitudinal end of each inner link plate 15 in a thickness direction of the inner link plate 15. Bushings 18, which have the form of round tubes, are coupled to the inner link plates 15 of the inner link 12 that face each other in the widthwise direction Y to maintain the distance between the inner link plates 15, which face each other, in the widthwise direction Y. The two axial ends of each bushing 18 is fitted into a corresponding pair of the bushing holes 17 in the inner link plates 15 in a manner in which the bushings 18 cannot be rotated. Further, rollers 19 having a larger diameter than the bushings 18 are fitted to the bushings 18 in a rotatable manner. Thus, the rollers 19 are supported in a clearance fitting state and rotatable relative to the bushings 18.

A circular pin hole 20, which has a slightly smaller inner diameter than the bushings 18, extends through each of one longitudinal end and another longitudinal end of each outer link plate 16 in a thickness direction of the outer link plate 16. The two ends of a substantially cylindrical coupling pin 21 is press-fitted into a corresponding pair of the pin holes 20 in the outer link plates 16. The coupling pins 21 are rotatably inserted into the bushings 18 that act as pin insertion portions of the inner links 12. Further, as shown in Fig. 1, the inner links 12 are pivotally coupled to the outer links 13 by the coupling pins 21 in a state in which the end of each inner link plate 15 overlaps the end of the outer link plate 16 that is adjacent in the longitudinal direction X of the chain 11. Each coupling pin 21 includes a flanged basal end (not shown in Fig. 1) and a distal end. The basal end of the coupling pin 21 is engaged with the outer surface of the outer link plate 16 located at one side in the widthwise direction Y of the outer link 13. The distal end of the coupling pin 21 projects out of the pin hole 20 in the outer link plate 16 at the other side in the widthwise direction Y of the outer link 13. In this state, a retaining pin 22 is attached to the distal end of the coupling pin 21 projecting out of the pin hole 20 in the outer link plate 16 so that the coupling pin 21 will not fall out of the pin hole 20.

### Connecting Link

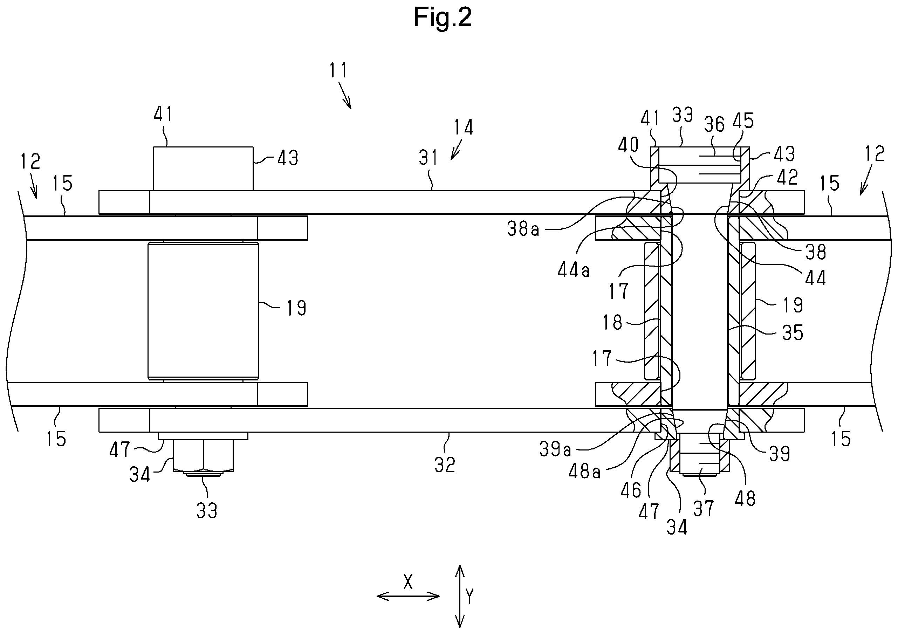

As shown in Figs. 1 and 2, the connecting link 14 includes a first link plate 31, a second link plate 32, connecting pins 33, and nut members 34. The first link plate 31 and the second link plate 32 have the form of a substantially rectangular plate and are similar to the outer link plates 16. The connecting pins 33 are substantially cylindrical and similar to the coupling pins 21. The first link plate 31 and the second link plate 32 are forged or stamped from a sheet of steel in the same manner as the inner link plates 15 and the outer link plates 16.

### Connecting Pin

The connecting pins 33 each include a shaft 35, a first male threaded portion 36, a second male threaded portion 37, a first truncated conical portion 38, and a second truncated conical portion 39. The first male threaded portion 36 is located at the basal end of the connecting pin 33. The first male threaded portion 36 has a larger outer diameter than the shaft 35. The second male threaded portion 37 is located at the distal end of the connecting pin 33. The second male threaded portion 37 has a smaller outer diameter than the shaft 35. The first truncated conical portion 38 is located toward the distal end of the connecting pin 33 from the first male threaded portion 36, that is, between the shaft 35 and the first male threaded portion 36. The first truncated conical portion 38 has a cross-sectional area that is gradually increased toward the basal end. The second truncated conical portion 39 is located toward the basal end of the connecting pin 33 from the second male threaded portion 37, that is, between the second male threaded portion 37 and the shaft 35. The second truncated conical portion 39 has a cross-sectional that is gradually increased toward the basal end.

The first truncated conical portion 38 has the form of a truncated cone and includes a basal end shaped to have a slightly smaller circular cross section than the first male threaded portion 36 and a distal end shaped to have the same circular cross section as the shaft 35. That is, the first truncated conical portion 38 has the form of a truncated cone and includes an outer surface 38a shaped so that its circular cross section becomes smaller toward the distal side. The second truncated conical portion 39 has the form of a truncated cone and includes a basal end shaped to have a slightly larger circular cross section than the second male threaded portion 37 and a distal end shaped to have a circular cross section of the same size as that of the shaft 35. That is, the second truncated conical portion 39 also has the form of a truncated cone and includes an outer surface 39a shaped so that its circular cross section becomes smaller toward the distal end.

As shown in Figs. 1 and 2, the connecting pin 33 has an outer diameter continuously varied from its distal end toward its basal end at the second male threaded portion 37, the second truncated conical portion 39, the shaft 35, the first truncated conical portion 38, and the first male threaded portion 36. The outer diameter is the smallest at the distal end of the connecting pin 33 where the second male threaded portion 37 is located and the largest at the basal end of the connecting pin 33 where the first male threaded portion 36 is located. The shaft 35 is formed to have an outer diameter between the outer diameter of the first male threaded portion 36 at its basal end and the outer diameter of the second male threaded portion 37 at its distal end. The second truncated conical portion 39 is formed to have an outer diameter that is gradually increased toward the basal end between the outer diameter of the second male threaded portion 37 and the outer diameter of the shaft 35. Further, the first truncated conical portion 38 is formed to have an outer diameter that is gradually increased toward the basal end between the outer diameter of the shaft 35 and the outer diameter of the first male threaded portion 36. In other words, the connecting pin 33 is formed so that its outer diameter increases sequentially in the order from the second male threaded portion 37, the second truncated conical portion 39, the shaft 35, the first truncated conical portion 38, and the first male threaded portion 36.

### Thread Pitch

Each connecting pin 33 is formed so that the first male threaded portion 36 and the second male threaded portion 37 differ in thread pitch. For example, the first male threaded portion 36 and the second male threaded portion 37 have different pitches so that the thread pitch of the first male threaded portion 36 is 1 mm and the thread pitch of the second male threaded portion 37 is 2 mm. In other words, the thread pitches of the first male threaded portion 36 and the second male threaded portion 37 are set so that a single rotation of the connecting pin 33 produces axial movement of 1 mm with the first male threaded portion 36 and axial movement of 2 mm with the second male threaded portion 37.

### First Link Plate

As shown in Figs. 1 and 2, the first link plate 31 has one longitudinal end and another longitudinal end, each including a first fitting hole 40 that is circular and has a larger diameter than the outer diameter of the first male threaded portion 36 of each connecting pin 33. A first connecting bushing 41, which has the form of a stepped round tube, is fitted into and fixed to the first fitting hole 40. The first connecting bushing 41 has a continuous shape including a step in the axial direction formed by a small-diameter tubular portion 42, which has an outer diameter that is equal to the inner diameter of the first fitting hole 40, and a large-diameter tubular portion 43, which has an outer diameter that is greater than the inner diameter of the first fitting hole 40. The first connecting bushing 41 is fixed to the first link plate 31 in a state in which the small-diameter tubular portion 42 is fitted into the first fitting hole 40 and an end face defined by a step surface formed by the end of the large-diameter tubular portion 43 near the small-diameter tubular portion 42 abuts against the surface of the first link plate 31.

A first pin hole 44 extends through the first connecting bushing 41 in the axial direction to allow for insertion of the connecting pin 33. The connecting pin 33 is inserted into the first pin hole 44 from one direction in the order of the second male threaded portion 37, the second truncated conical portion 39, the shaft 35, the first truncated conical portion 38 and the first male threaded portion 36. The first pin hole 44 has a wall surface 44a including a part having the form of a truncated cone, which is one type of a cone, corresponding to the outer surface 38a of the first truncated conical portion 38 of the connecting pin 33, and a part having the form of a round tube and corresponding to the first male threaded portion 36 of the connecting pin 33. The first pin hole 44 includes a female threaded portion 45 allowing for fastening of the first male threaded portion 36 of the connecting pin 33 and formed in the wall surface of the part having the form of a round tube and corresponding to the first male threaded portion 36 of the connecting pin 33. In an example, the first connecting bushing 41 is formed from, for instance, stainless steel exhibiting higher hardness than the steel forming the first link plate 31.

### Second Link Plate

As shown in Figs. 1 and 2, the second link plate 32 has one longitudinal end and another longitudinal end, each including a second fitting hole 46 that is circular and has a larger diameter than the shaft 35 of each connecting pin 33. A second connecting bushing 47, which has the form of a round tube and has an axial length that is slightly greater than the thickness of the second link plate 32, is fitted into and fixed to the second fitting hole 46. The axial length of the second connecting bushing 47 may be equal to the thickness of the second link plate 32 or slightly less than the thickness of the second link plate 32.

A second pin hole 48 extends through the second connecting bushing 47 in the axial direction to allow for insertion of the second male threaded portion 37 at the distal end of the connecting pin 33. The second pin hole 48 has a wall surface 48a having the form of a truncated cone, which is one type of a cone, corresponding to the outer surface 39a of the second truncated conical portion 39 of the connecting pin 33. In the same manner as the first connecting bushing 41 described above, the second connecting bushing 47 is formed from, for instance, stainless steel exhibiting higher hardness than steel.

### Nut Member

As shown in Figs. 1 and 2, the nut members 34 are each configured to allow for fastening of the second male threaded portion 37 at the distal end of the corresponding connecting pin 33. The second male threaded portion 37 of the connecting pin 33 projects out of the second pin hole 48 when each connecting pin 33 is inserted through the first pin hole 44 of the first link plate 31, the bushing 18 of the inner link 12, and the corresponding second pin hole 48 of the second link plate 32. The corresponding nut member 34 is fastened to the second male threaded portion 37 of the connecting pin 33 projecting out of the second pin hole 48. The nut member 34 is not limited to a nut having a threaded hole extending therethrough as shown in the example of Figs. 1 and 2 and may be, for example, a cap nut or the like having a closed end and a threaded hole that does not extend therethrough.

### Operation

The operation of the present embodiment will now be described.

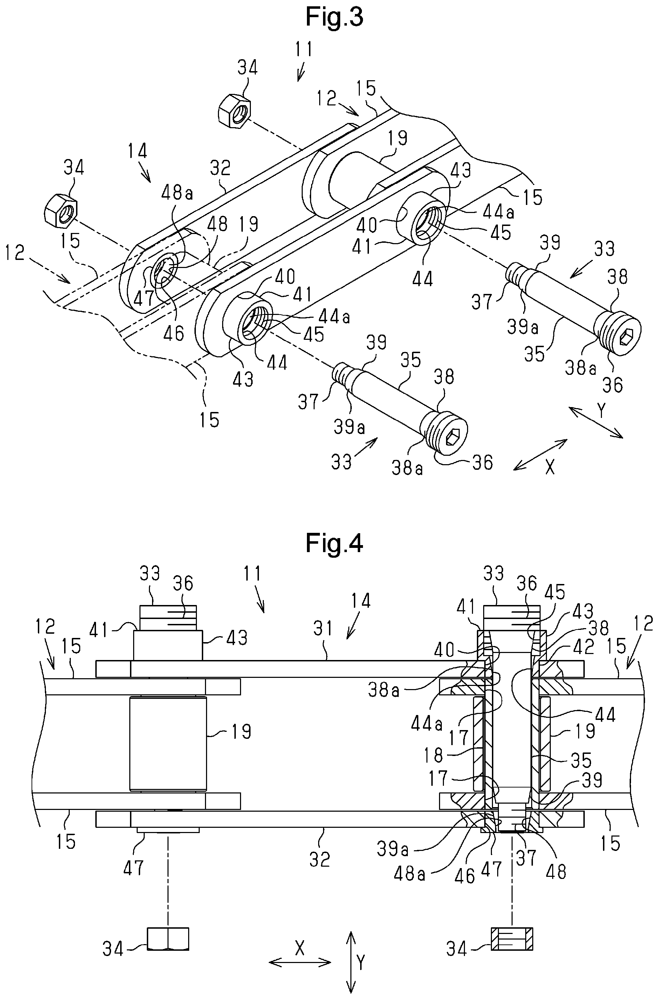

As shown in Fig. 3, when using the connecting link 14 to break and connect the chain 11, the connecting link 14 is dismantled and two inner links 12 are arranged spaced apart from each in the longitudinal direction X of the chain 11. In Fig. 3, to aid description, among the two inner links 12 located at the left and right sides of the connecting link 14, the inner link plates 15 and the roller 19 of the inner link 12 located at the left side is shown in double-dashed lines.

### Aligning Step

First, the first link plate 31 is arranged at one side of the inner links 12 in the widthwise direction Y, and the second link plate 32 is arranged at the other side of the inner links 12 in the widthwise direction Y. Then, the first pin holes 44 of the first link plate 31, the bushings 18 (not shown in Fig. 3) acting as the pin insertion portions of the inner link 12, and the second pin holes 48 of the second link plate 32 are coaxially aligned. Further, the connecting pins 33 are inserted through the first pin holes 44, the bushings 18, and the second pin holes 48 so as to extend from the first pin holes 44 through the bushings 18 and toward the second pin holes 48.

### Pin Insertion Step

As shown in Fig. 4, in this case, the distal end of each connecting pin 33 passes through the corresponding first pin hole 44 of the first link plate 31 and the corresponding bushing 18, which acts as the pin insertion portion of the inner link 12, and reaches the corresponding second pin hole 48 of the second link plate 32. Further, the shaft 35 of the connecting pin 33 passes through the first pin hole 44 of the first link plate 31 and is then inserted through the bushing 18 of the inner link 12. The basal end of the connecting pin 33 is positioned in a state in which the first male threaded portion 36 at the basal end is about to be fastened to the female threaded portion 45 of the first pin hole 44 and the outer surface 38a of the first truncated conical portion 38 is about to come into planar contact with the conical wall surface 44a of the first pin hole 44.

### Thread Fastening Step

Next, each connecting pin 33 is rotated in a direction that fastens the first male threaded portion 36 to the female threaded portion 45 in the corresponding first pin hole 44. More specifically, the connecting pin 33 is rotated in, for example, the right-hand direction, which is a thread tightening direction. Consequently, the connecting pin 33 is moved downward in the axial direction as viewed in Fig. 4 while rotating in a state in which the first male threaded portion 36 is fastened with the female threaded portion 45 in the first pin hole 44 so that the first truncated conical portion 38 is fitted to the part having a conical surface in the first pin hole 44. More specifically, the first truncated conical portion 38 of the connecting pin 33 comes into planar contact with the conical wall surface 44a of the first pin hole 44.

From this state, the connecting pin 33 is further rotated in the thread tightening direction to tighten the first male threaded portion 36 to the female threaded portion 45. Consequently, the connecting pin 33 is set in a state in which the outer surface 38a of the first truncated conical portion 38 comes into friction engagement with and closely contacts the wall surface 44a of the first pin hole 44 in a nested manner. More specifically, the first male threaded portion 36 at the basal end of the connecting pin 33 is tightened to the female threaded portion 45 in the first pin hole 44, and the first truncated conical portion 38 is fitted into the first pin hole 44 of the first link plate 31 in a state of close contact corresponding to an interference fitting state.

In this case, in a state in which the distal end of the connecting pin 33, is inserted through the second pin hole 48 of the second link plate 32, the second male threaded portion 37 at the distal end is passed through the second pin hole 48 to fit the second truncated conical portion 39 into the second pin hole 48 in a nested state. As a result, the truncated conical outer surface 39a of the second truncated conical portion 39 comes into contact with the truncated conical wall surface 48a of the second pin hole 48. In this state, the corresponding nut member 34 is fastened to the second male threaded portion 37 of the connecting pin 33 projecting out of the second pin hole 48, and the nut member 34 is tightened. Consequently, the connecting pin 33 is set in a state in which the outer surface 39a of the second truncated conical portion 39 comes into friction engagement with and closely contacts the wall surface 48a of the second pin hole 48 in a nested manner. More specifically, the second truncated conical portion 39 of the connecting pin 33 is fitted into the second pin hole 48 of the second link plate 32 in a state of close contact corresponding to an interference fitting state.

Referring to Fig. 2, when the chain 11 has been broken and connected at the connecting link 14, aging may loosen the nut members 34. In this case, external force acting to rotate the connecting pins 33 in the loosening direction may be applied to the connecting pins 33. This may rotate the connecting pins 33 and cause wear in the wall surfaces of the first pin hole 44 and the second pin hole 48 thereby enlarging the hole diameters and causing undesirable stretching of the chain 11 subsequent to the breaking and connecting. In this respect, the connecting pins 33 of the present embodiment each include the first male threaded portion 36 and the second male threaded portion 37 that have different thread pitches.

If the first male threaded portion 36 and the second male threaded portion 37 were to have the same thread pitch, when external force acts to rotate the connection pin 33 in the loosening direction, the connecting pin 33 would be rotated in the loosening direction and ultimately become separated. In the present embodiment, however, when the connecting pin 33 is rotated in the loosening direction subsequent to chain breaking and connecting, in the axial direction of the connecting pin 33, the movable distance based on the thread pitch of the first male threaded portion 36 differs from the movable distance based on the thread pitch of the second male threaded portion 37. This restricts axial movement of the connecting pin 33 which, in turn, restricts rotation in the loosening direction. Thus, a situation is avoided in which the connecting pin 33 rotates in the loosening direction and becomes separated subsequent to breaking and connecting of the chain 11.

### Advantages

The advantages of the present embodiment will now be described.
(1) In each connecting pin 33, the first truncated conical portion 38 at the basal side and the second truncated conical portion 39 at the distal side are respectively fitted into the first pin hole 44 of the first link plate 31 and the second pin hole 48 of the second link plate 32 in a state of close contact corresponding to an interference fitting state. In this state, the outer surface of the connecting pin 33 does not slide along the wall surface of the first pin hole 44 of the first link plate 31 and the wall surface of the second pin hole 48 of the second link plate 32. This allows undesirable stretching of the chain 11 to be avoided subsequent to chain breaking and connecting without the need for significant effort.
(2) The connecting pins 33 are each formed so that its outer diameter increases sequentially in the order from the second male threaded portion 37 at the distal end, the second truncated conical portion 39, the shaft 35, the first truncated conical portion 38, and the first male threaded portion 36 at the basal end. Thus, in a state in which the first pin holes 44, the bushings 18 acting as pin insertion portions, and the second pin holes 48 are aligned, the connecting pins 33 may readily be inserted through the first pin holes 44, the bushings 18, and the second pin hole 48 from one direction.
(3) The first male threaded portion 36 and the second male threaded portion 37 have different thread pitches. Thus, when external force acts on the corresponding connecting pin 33 subsequent to chain breaking and connecting, axial movement of the connecting pin 33 is restricted. As a result, subsequent to breaking and connecting of the chain 11, separation of the connecting pin 33 caused by rotation in the loosening direction will be limited.

The above embodiment may be modified as described below. The elements included in the above embodiment and the elements included in the modified examples described below may be combined in any manner, and the elements included in the modified examples may be combined in any manner.

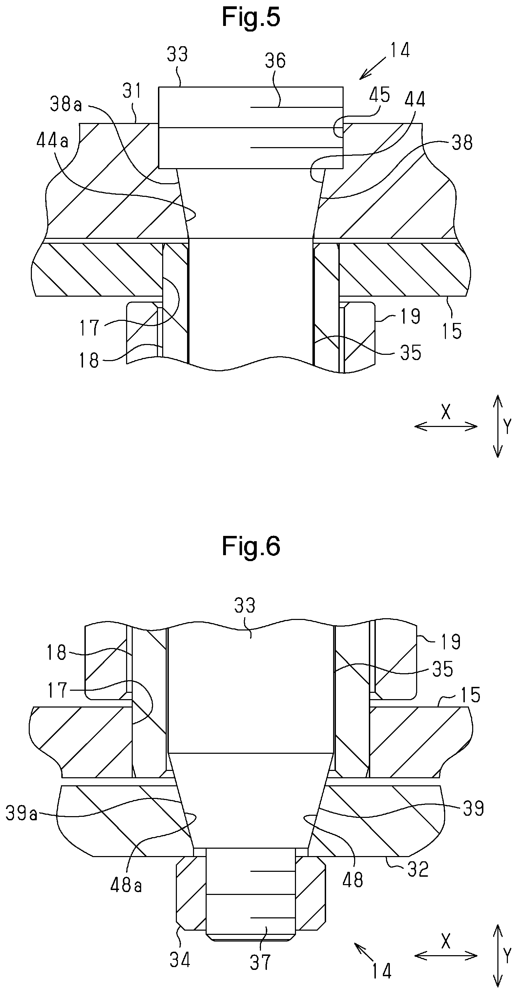

The connecting link 14 may be modified as shown in the example of Fig. 5. In the connecting link 14, each first pin hole 44 is formed directly in the first link plate 31. More specifically, the first pin hole 44 may extend through the first link plate 31, and the wall surface 44a may include a part having the form of a truncated cone corresponding to the outer surface 38a of the first truncated conical portion 38 of the connecting pin 33, and a part having the form of a round tube and corresponding to the circumferential surface of the first male threaded portion 36 of the connecting pin 33. In this case, the part of the wall surface in the first pin hole 44 having the form of a round tube and corresponding to the circumferential surface of the first male threaded portion 36 of the connecting pin 33 includes the female threaded portion 45, which allows for fastening of the first male threaded portion 36 of the connecting pin 33. In this case, it is preferable that the first link plate 31 be thicker than that in the above embodiment. Further, in this case, it is preferable that the material of the entire first link plate 31 or the material of the first link plate 31 at the portion where the first pin holes 44 are formed be, for example, a material exhibiting high hardness such as stainless steel.

The connecting link 14 may be modified as shown in the example of Fig. 6. More specifically, each second pin hole 48 may extend axially through the second link plate 32 in a manner allowing the second male threaded portion 37 at the distal end of each connecting pin 33 to be inserted therethrough, with the wall surface 48a having the form of a truncated cone and corresponding to the outer surface 39a of the second truncated conical portion 39 of the connecting pin 33. In this case, it is preferable that the material of the entire second link plate 32 or the material of the second link plate 32 at the portion where the second pin holes 48 are formed be, for example, a material exhibiting high hardness such as stainless steel.

Each connecting pin 33 may have any structure as long as it includes the first male threaded portion 36 and the first truncated conical portion 38 at its basal side, and its distal end is inserted through and fitted to the second pin hole 48 of the second link plate 32 in a manner restricting rotation. More specifically, among the second male threaded portion 37 and the second truncated conical portion 39 at the distal end, the connecting pin 33 does not have to include at least the second truncated conical portion 39. In other words, the connecting pin 33 may include the first male threaded portion 36 and the first truncated conical portion 38 at its basal side, and the second male threaded portion 37 and the second truncated conical portion 39 may both be omitted from its distal side. Alternatively, the second male threaded portion 37 may be included, and the second truncated conical portion 39 may be omitted.

Also, in this connecting pin 33, the first truncated conical portion 38 is fitted into the first pin hole 44 of the first link plate 31 in a state of close contact corresponding to an interference fitting state, and the distal end is fitted to the second pin hole 48 of the second link plate 32 in a manner restricting rotation. Thus, the outer surface of the connecting pin 33 does not slide along the wall surface of the first pin hole 44 of the first link plate 31 and the wall surface of the second pin hole 48 of the second link plate 32. Accordingly, in the same manner as the above embodiment, undesirable stretching of the chain 11 subsequent to chain breaking and connecting may be avoided without the need for significant effort.

In each connecting pin 33, the basal end of the second truncated conical portion 39 may have a cross-sectional shape that is circular and larger than the cross-sectional shape of the shaft 35 as long as its size allows for passage through the first pin hole 44 of the first link plate 31. The connecting pin 33 may have any structure as long as the basal end of the second truncated conical portion 39 has a cross-sectional shape that is circular and larger than the cross-sectional shape of the shaft 35.

The first male threaded portion 36 and the second male threaded portion 37 of each connecting pin 33 may have the same thread pitch, with one of the two threaded portions having a left-hand thread structure and the other one having a right-hand thread structure. In this case, the first male threaded portion 36 and the second male threaded portion 37 have opposite thread tightening directions and form a reverse thread structure. Thus, subsequent to breaking and connecting of the chain 11, when the connecting pin 33 is rotated in a direction loosening one of the first male threaded portion 36 and the second male threaded portion 37, the rotation direction will be a thread tightening direction, which is opposite the loosening direction, for the other one. Since rotation of the connecting pin 33 in that direction is restricted, subsequent to breaking and connecting of the chain 11, separation of the connecting pin 33 that would be caused by rotation in the loosening direction is limited.

The chain 11 of the above embodiment is of a flat type. In each of the inner links 12 and the outer links 13, which are alternately arranged in the longitudinal direction X, the inner link plates 15 are spaced apart from each other by a distance in the widthwise direction Y that is equal at one side and the other side in the longitudinal direction X, and the outer link plates 16 are spaced apart from each other by a distance in the widthwise direction Y that is equal at one side and the other side in the longitudinal direction X. The chain 11, however, may be of an offset type including links coupled in series in the longitudinal direction X. The links facing each other in the widthwise direction Y are spaced apart by a distance that differs between one side and the other side in the longitudinal direction X. In this case, preferably, the first link plate 31 and the second link plate 32 of the connecting link 14 each have a longitudinally intermediate part including a bent portion that is bent toward the other link plate in the widthwise direction Y. Further, preferably, among the holes formed in the first link plate 31 and the second link plate 32 at one end and another end in the longitudinal direction, the holes formed at the side where the distance from the other link plate in the widthwise direction Y is narrow are holes allowing the shaft 35 of each connecting pin 33 to be inserted therethrough in a rotatable manner. That is, these holes are not the first pin hole 44 nor the second pin hole 48 and may be circular holes that are slightly greater in diameter than the shaft 35 of each connecting pin 33.

## Claims

1. A connecting link used to break and connect a chain that includes links arranged in series in a longitudinal direction of the chain, in which adjacent ones of the links in the longitudinal direction are coupled together in a rotatable manner by a coupling pin, the connecting link comprising:
a connecting pin including a male threaded portion at a basal end and a truncated conical portion that is located toward a distal end from the male threaded portion and has a cross-sectional area that is gradually increased toward the basal end;
a first link plate including a hole in each of one end and another end in a longitudinal direction to allow insertion of the connecting pin, wherein at least one of the hole in the one end and the hole in the other end defines a first pin hole including a female threaded portion allowing for fastening of the male threaded portion and a wall surface shaped as a truncated cone in correspondence with an outer surface of the truncated conical portion; and
a second link plate including a hole in each of one end and another end in a longitudinal direction to allow insertion of the connecting pin, wherein at least one of the hole in the one end and the hole in the other end defines a second pin hole allowing for fitting of the distal end of the connecting pin.

2. A connecting link used to break and connect a chain that includes links arranged in series in a longitudinal direction of the chain, in which adjacent ones of the links in the longitudinal direction are coupled together in a rotatable manner by a coupling pin, the connecting link comprising:
a connecting pin including a first male threaded portion at a basal end, a second male threaded portion at a distal end, and a first truncated conical portion that is located toward the distal end from the first male threaded portion and has a cross-sectional area that is gradually increased toward the basal end;
a first link plate including a hole in each of one end and another end in a longitudinal direction to allow insertion of the connecting pin, wherein at least one of the hole in the one end and the hole in the other end defines a first pin hole including a female threaded portion allowing for fastening of the first male threaded portion and a wall surface shaped as a truncated cone in correspondence with an outer surface of the first truncated conical portion;
a second link plate including a hole in each of one end and another end in a longitudinal direction to allow insertion of the connecting pin, wherein at least one of the hole in the one end and the hole in the other end defines a second pin hole allowing for passage of the second male threaded portion; and
a nut member allowing for fastening of the second male threaded portion of the connecting pin.

3. The connecting link according to claim 2, wherein
the connecting pin includes a second truncated conical portion that is located closer to the distal end than the first truncated conical portion and has a cross-sectional area that is gradually increased from the second male threaded portion toward the basal end, and
the second pin hole of the second link plate includes a wall surface shaped as a truncated cone in correspondence with an outer surface of the second truncated conical portion.

4. The connecting link according to claim 2 or 3, wherein the first male threaded portion differs from the second male threaded portion in thread pitch.

5. The connecting link according to claim 2 or 3, wherein one of the first male threaded portion and the second male threaded portion has a left-hand thread structure and the other one of the first male threaded portion and the second male threaded portion has a right-hand thread structure.

6. A chain, comprising:
links arranged in series in a longitudinal direction of the chain;
a coupling pin pivotally coupling adjacent ones of the links in the longitudinal direction; and
the connecting link according to any one of claims 1 to 5, wherein
the connecting link is located at an intermediate part in the longitudinal direction of the chain, and
the connecting link couples one of the links that is adjacent to the connecting link at one side in the longitudinal direction and one of the links that is adjacent to the connecting link at another side in the longitudinal direction.
